# EUROPÄISCHE PATENTSCHRIFT

(11) **EP 0 755 945 B1**
(45) Veröffentlichungstag und Bekanntmachung des Hinweises auf die Patenterteilung: **25.11.1998**
(21) Anmeldenummer: 95810486.1
(22) Anmeldetag: 26.07.1995
(51) Int. Cl.: C08F 2/02

(54) **Verfahren und Einrichtung zum Durchführen einer Polymerisation in einem Rohrreaktor**
Process and device for carrying out a polymerisation in a tube reactor
Procédé et dispositif pour l'exécution d'une polymérisation dans un réacteur à tubes

(43) Veröffentlichungstag der Anmeldung: 29.01.1997
(73) Patentinhaber: Sulzer Chemtech AG, 8404 Winterthur (CH)
(72) Erfinder: Juvet, Jacques, Dr., CH-8412 Aesch bei Neftenbach (CH)
(74) Vertreter: Heubeck, Bernhard

(56) Entgegenhaltungen:
- EP-A- 0 021 341
- EP-A- 0 096 201

## Beschreibung

Die Erfindung betrifft ein Verfahren zum Durchführen einer Polymerisation in einem Rohrreaktor. Sie bezieht sich auch auf eine Einrichtung zum Durchführen des Verfahrens sowie auf entsprechende Verwendungen.

Polystyrene und Copolymere, Polyacrylate wie z.B. PMMA und andere Produkte lassen sich mittels ionischer Initiierung polymerisieren. Diese Initiierung wird mit anionischen oder kationischen Starterstoffen herbeigeführt, die dem Monomer beigemischt werden. Solche Starterstoffe, kurz Starter genannt, sind temperaturempfindlich und zersetzen sich, wenn die Temperatur beispielsweise 150°C überschreitet.

Als Starterstoffe sind metallorganische Verbindungen bekannt: *sec* Butyl-Lithium (C₄H₉Li) und Cumyl-Kalium (C₉H₁₁K) für die Herstellung von Polystyrol, Diphenylmethyl-Kalium (C₁₃H₁₁K), Fluorenyl-Kalium (C₁₃H₉K) und Lithiumchlorid (LiCl) für die Herstellung von Polymethylmethacrylat (PMMA).

Die ionische Polymerisation ist schnell und sehr exotherm. Durch die freigesetzte Wärme kann die Temperatur über die Zersetzungstemperatur des Starters anwachsen, wodurch die Reaktion zum Erliegen kommt.

Um eine kontinuierliche Reaktion durchzuführen, bietet es sich an, einen Rohrreaktor zu verwenden, in dem statische Mischelemente querschnittsfüllend angeordnet sind (vgl. EP 0 096 201). Da allerdings die Polymerisation mit einem starken Anstieg der Viskosität verbunden ist, ergeben sich Probleme, die zu einer uneinheitlichen Produktequalität führen. Denn aufgrund des axialen Viskositätsgradienten kann sich eine Segregation ausbilden, bei der stark polymerisierte, hochviskose Phasen von wenig polymerisierten, niedrigviskosen Phasen entmischt werden. Ferner kann auch eine Belagsbildung an der Reaktorwand zu einer ungenügenden Produktequalität beitragen.

Es ist daher Aufgabe der Erfindung, für die ionische Polymerisation ein kontinuierliches Verfahren zu schaffen, das zu einer verbesserten Produktequalität führt. Diese Aufgabe wird durch die Merkmale des Anspruchs 1 gelöst. Dabei wird der axiale Viskositätsgradient in einem Rohrreaktor durch ein rückgeführtes Reaktionsprodukt ausgeglichen, das zu einem beträchtlichen Teil noch aus unreagierten Monomeren besteht. Damit in der Rückführleitung keine Polymerisation stattfinden kann, die einen störenden Einfluss auf die Durchführung des Verfahrens ausüben würde, wird am Ausgang des Rohrreaktors der Starter thermisch vernichtet.

Die abhängigen Ansprüche 2 bis 4 beziehen sich auf vorteilhafte Ausführungsformen des erfindungsgemässen Verfahrens. Die Ansprüche 5 bis 7 betreffen Einrichtungen zum Durchführen des erfindungsgemässen Verfahrens und Anspruch 8 betrifft entsprechende Verwendungen.

Nachfolgend wird die Erfindung anhand der Zeichnungen erläutert. Es zeigen:
- Fig. 1: eine schematische Darstellung der Einrichtung zum Durchführen des erfindungsgemässen Verfahrens und
- Fig. 2: ein Diagramm mit dem schematisch dargestellten Verlauf der Temperatur und der Viskosität in der Einrichtung von Fig.1.

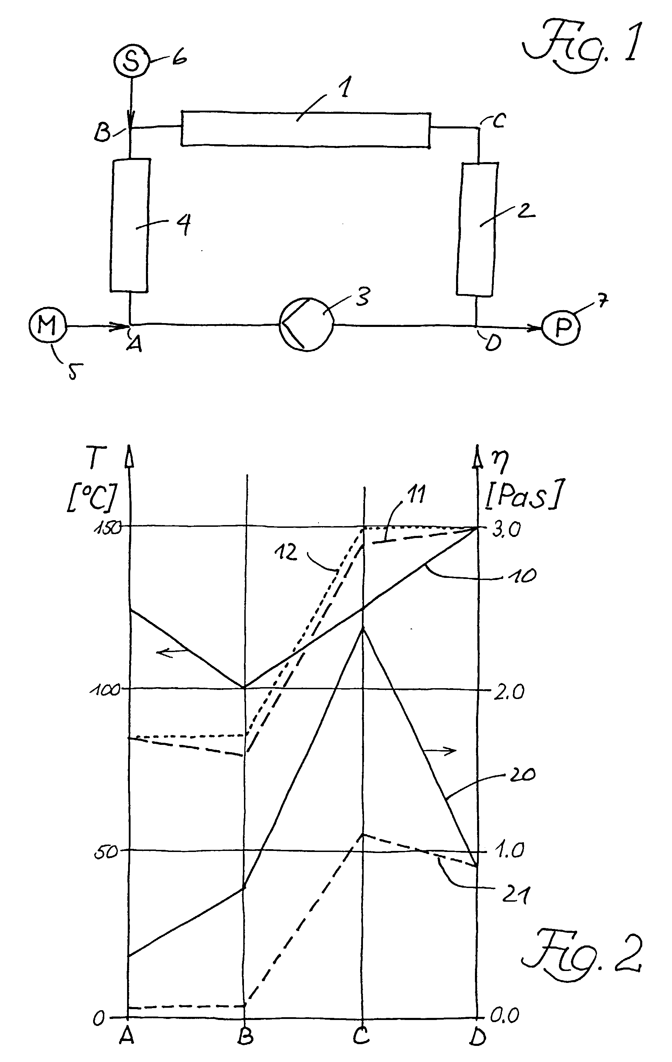

Das Schema der Fig.1 zeigt: einen Rohreaktor 1, einen Misch-Wärmetauscher 2 zum Erwärmen des Produkts, eine Pumpe 3, einen Misch-Wärmetauscher 4 zum Kühlen des dem Reaktor 1 einzuspeisenden Gemisches, eine Zuführstelle 5 für ein Monomer M, eine Zuführstelle 6 für einen Starter S und eine Entnahmestelle 7 für das erfindungsgemäss erzeugte Produkt P. Für die Stellen A, B, C und D sind im Diagramm der Fig.2 die Temperatur- und Viskositäts-Werte für zwei Ausführungsbeispiele angegeben.

Die ausgezogenen Kurven 10 (Temperatur) und 20 (Viskosität) sind dem ersten Ausführungsbeispiel zugeordnet. Das Produkt P enthält zu gleichen Teilen Polymer und Monomer, nämlich jeweils 2,7 kg/h. Bei dem Punkt D tritt 26,4 kg/h dieses Polymer-Monomer-Gemisches aus dem Wärmetauscher 2 aus. Davon wird 21,6 kg/h mit der Pumpe 3 zum Punkt A zurückgeführt, wo 5,4 kg/h Monomer M zugemischt wird. Die Temperatur dieser Mischung beträgt bei A 124°C. Im Kühler 4 zwischen A und B wird die Temperatur auf 100°C erniedrigt. Anschliessend wird bei B Starter S zugemischt. Im Reaktorrohr 1 erhöht sich die Temperatur durch die freigesetzte Reaktionswärme auf 126°C (Punkt C). Durch Erwärmen im Wärmetauscher 2 wird schliesslich die Temperatur des Produkts auf 150°C erhöht. Bei dieser Temperatur zersetzt sich der Starter S. Wie die Kurve 20 zeigt, nimmt die Viskosität im Reaktor 2 zwischen B und C von 0,78 auf 2,37 Pa s (Ns/m²) zu, d.h. um rund das Dreifache.

Während beim ersten Ausführungsbeispiel der Umwandlungsgrad (= Quotient von der Menge Monomer zur Gesamtmenge) bei der Reaktion von 40 auf 50 % anwächst, ist beim zweiten Beispiel - gestrichelte Kurven 11 und 12 - vorgesehen, dass sich der Umwandlungsgrad von 25 auf 50 % vergrössert. Hier nimmt die Viskosität im Reaktor 1 von 0,064 auf 1,097 Pa s zu, d.h. um rund einen Faktor 17. Dieses Verhältnis ist ungünstig hoch; es sollte möglichst nicht grösser als 10 sein.

Wie die Kurve 12 für das zweite Ausführungsbeispiel zeigt, wiese das Produkt nach dem Reaktor gerade die Zersetzungstemperatur (150°C) auf, wenn zwischen A und B nicht gekühlt würde. In diesem Fall könnte man auf den Kühler 4 und den Erwärmer 2 verzichtet werden. Es ist aber nicht empfehlenswert, diese besondere Prozessführung vorzusehen, da einerseits eine grosse Viskositätszunahme vorliegt und da andererseits eine Kontrolle des Verfahrens schwierig durchzuführen wäre.

Bei einem gegebenem Mischungsverhältnis von rückgeführtem Produkt und frisch zugeführtem Monomer wird mit dem Wärmetauscher 4 eine Anfangstemperatur mit Vorzug so vorgegeben, dass die Temperatur des Gemisches am Ausgang des Rohrreaktors mindestens 5 K unter der Zersetzungstemperatur liegt.

Mit Vorteil weist der Rohrreaktor 1 Mischelemente auf, deren Struktur sich aus ineinandergreifenden, sich kreuzenden Stegen aufbaut, wobei die Stege zwei Gruppen von parallel ausgerichteten Strukturelementen bilden (vgl DE-PS 28 08 854).

Für die Misch-Wärmetauscher 2 und 4 wählt man vorteilhafterweise eine Vorrichtung, wie sie aus der DE-PS 28 39 564 bekannt ist: Diese Vorrichtung ist ein statischer Mischer mit Stegen, die als Wärmetauscherrohre ausgebildet sind.

## Patentansprüche

1. Verfahren zum Durchführen einer Polymerisation in einem Rohrreaktor, folgende Schritte umfassend:
- Vermischen von frisch zugeführtem Monomer mit einem rückgeführten Monomer-Polymer-Gemisch sowie Kühlen des Gemisches auf eine vorgegebene Anfangstemperatur,
- Zumischen eines inaktivierbaren Polymerisations-Starters, dessen Inaktivierung bei Erwärmung über eine Zersetzungstemperatur eintritt, sowie Durchführen einer teilweisen Polymerisation im Rohrreaktor,
- Erwärmen des den Rohrreaktor verlassenden Gemisches bis mindestens auf die genannte Zersetzungstemperatur und schliesslich
- Rückführen eines Teils des Gemisches sowie Entnahme des anderen Teils als Produkt.

2. Verfahren nach Anspruch 1, dadurch gekennzeichnet, dass das Gemisch am Ausgang des Rohrreaktors mindestens zur Hälfte in polymerisierter Form vorliegt.

3. Verfahren nach Anspruch 1 oder 2, dadurch gekennzeichnet, dass die Menge des rückgeführten Gemisches bezogen auf die Menge des zugeführten Monomers so gewählt wird, dass im Rohrreaktor die Viskosität des Gemisches bei der Polymerisation nicht um mehr als rund das Zehnfache, mit Vorzug nicht um mehr als das Dreifache, zunimmt.

4. Verfahren nach einem der Ansprüche 1 bis 3, dadurch gekennzeichnet, dass bei einem gegebenem Mischungsverhältnis von rückgeführtem Gemisch und frisch zugeführtem Monomer eine Anfangstemperatur vorgegeben wird, so dass die Temperatur des Gemisches am Ausgang des Rohrreaktors mindestens 5 K unter der Zersetzungstemperatur liegt.

5. Einrichtung zum Durchführen des Verfahrens nach einem der Ansprüche 1 bis 4, folgende Komponenten umfassend:
- einen Rohrreaktor (1) mit raumfüllend angeordneten, statischen Mischelementen,
- eingangs- und ausgangsseitig am Rohrreaktor je mindestens einen Misch-Wärmetauscher (4, 2),
- eine Rückführleitung mit Pumpe (3) für einen ersten Teil des Gemisches, ferner
- eine Zuführstelle (5) für ein Monomer (M) nach der Rückführpumpe (3), eine Zuführstelle (6) für einen Starter (S) nach dem eingangsseitigen Misch-Wärmetauscher (4) sowie eine Produkt-Entnahmestelle (7) für einen zweiten Teil des Gemisches (P) nach dem ausgangsseitigen Misch-Wärmetauscher (2).

6. Einrichtung nach Anspruch 5, dadurch gekennzeichnet, dass der Rohrreaktor (1) Mischelemente mit einer Struktur aufweist, die sich aus ineinandergreifenden, sich kreuzenden Stegen aufbaut, wobei die Stege zwei Gruppen von parallel ausgerichteten Strukturelementen bilden.

7. Einrichtung nach Anspruch 5 oder 6, dadurch gekennzeichnet, dass die Misch-Wärmetauscher (2, 4) statische Mischer mit Stegen sind, die als Wärmetauscherrohre ausgebildet sind.

8. Verwendung der Einrichtung nach einem der Ansprüchen 5 bis 7 zum Herstellen von Polystyrol oder PMMA, wobei als ionischer Starter *sec*-Butyllithium bzw. LiCl verwendet wird.

## Claims

1. Process for carrying out a polymerisation in a tube reactor comprising the following steps:
- mixing a freshly supplied monomer with a returned monomer-polymer mixture as well as cooling the mixture to a prescribed initial temperature,
- admixing an inactivatable polymerisation starter, the inactivation of which begins when heated above a decomposition temperature, as well as performing a partial polymerisation in the tube reactor,
- heating the mixture leaving the tube reactor to at least the said decomposition temperature, and finally
- returning a portion of the mixture and removal of the other portion as product.

2. Process in accordance with claim 1 characterised in that at least half of the mixture at the outlet of the tube reactor is present in polymerised form.

3. Process in accordance with claim 1 or 2 characterised in that the amount of the returned mixture is chosen in relation to the amount of monomer introduced in such a manner that the viscosity of the mixture in the tube reactor during polymerisation does not increase by more than approximately ten times, preferably by not more than three times.

4. Process in accordance with one of the claims 1 to 3 characterised in that for a given mixing ratio of returned mixture and freshly supplied monomer an initial temperature is prescribed so that the temperature of the mixture at the outlet of the tube reactor lies at least 5 K below the decomposition temperature.

5. Apparatus for carrying out the process in accordance with one of the claims 1 to 4 comprising the following components:
- a tube reactor (1) with static mixer elements arranged so as to be space filling,
- at least one mixer-heat exchanger (4, 2) at each of the input side and the output side of the tube reactor,
- a return line with pump (3) for a first portion of the mixture, further
- a supply point (5) for a monomer (M) after the feedback pump (3), a supply point (6) for a starter (S) after the input-side mixer-heat exchanger (4) as well as a product removal point (7) for a second portion of the mixture (P) after the mixer-heat exchanger (2) at the output side.

6. Apparatus in accordance with claim 5 characterised in that the tube reactor (1) has mixer elements with a structure which is built up of intermeshing arms crossing with one another, where the arms form two groups of structure elements directed parallel to one another.

7. Apparatus in accordance with claim 5 or 6 characterised in that the mixer-heat exchangers (2, 4) are static mixers with arms which are formed as heat exchanger tubes.

8. Use of the apparatus according to one of the claims 5 to 7 for the manufacture of polystyrene or PMMA, where secbutyl-lithium or LiCl is used as an ionic starter.

## Revendications

1. Procédé pour l'exécution d'une polymérisation dans un réacteur à tube, comprenant les étapes suivantes :
- mélange du monomère fraîchement amené avec un mélange monomère-polymère en retour ainsi que refroidissement du mélange à une température prédéterminée de début,
- mélange d'un starter de polymérisation inactivable, dont l'inactivation se produit lorsqu'il est chauffé au-delà d'une température de décomposition ainsi que l'exécution d'une polymérisation partielle dans le réacteur à tube,
- chauffage du mélange quittant le réacteur à tube au moins jusqu'à ladite température de décomposition et enfin
- retour d'une partie du mélange et enlèvement de l'autre partie comme produit.

2. Procédé selon la revendication 1, caractérisé en ce que le mélange à la sortie du réacteur à tube se présente au moins pour la moitié sous une forme polymérisée.

3. Procédé selon la revendication 1 ou 2, caractérisé en ce que la quantité du mélange retourné rapportée à la quantité du monomère introduit est choisie de façon que, dans le réacteur à tube, la viscosité du mélange de la polymérisation n'augmente pas plus d'environ dix fois et avantageusement pas plus d'environ trois fois.

4. Procédé selon l'une des revendications 1 à 3, caractérisé en ce que pour un rapport donné de mélange du mélange retourné et du monomère fraîchement introduit, une température de départ est prédéterminée de façon que la température du mélange à la sortie du réacteur à tubes se trouve au moins à 5 K en-dessous de la température de décomposition.

5. Dispositif pour l'exécution du procédé selon l'une des revendications 1 à 4, comportant les composants suivants :
- un réacteur à tube (1) avec éléments statiques de mélange agencés de façon à remplir l'espace,
- au moins un échangeur de chaleur-mélangeur (4, 2), à chaque fois du côté entrée et sortie du réacteur à tube,
- une conduite de retour avec pompe(3) pour une première partie du mélange, de plus
- un point d'entrée (5) pour un monomère (M) après la pompe de retour (3), un point d'entrée (6) pour un starter (S) après l'échangeur de chaleur-mélangeur côté entrée (4) ainsi qu'un point d'enlèvement du produit (7) pour une seconde partie du mélange (P) après l'échangeur de chaleur-mélangeur (2) côté sortie.

6. Dispositif selon la revendication 5, caractérisé en ce que le réacteur à tube (1) présente des éléments de mélange avec une structure qui se compose de nervures se croisant et en engrènement, et les nervures forment deux groupes d'éléments de structure dirigés parallèlement.

7. Dispositif selon la revendication 5 ou 6, caractérisé en ce que les échangeurs de chaleur-mélangeurs (2, 4) sont des mélangeurs statiques avec des nervures qui sont configurées en tant que tubes d'échangeur de chaleur.

8. Utilisation du dispositif selon l'une des revendications 5 à 7 pour la production de polystyrène ou de PMMA, et où l'on utilise en tant que starter ionique du sec-butyllithium ou LiCl.
